(19) **Europäisches Patentamt**

**European Patent Office**

**Office européen des brevets**

(11) **EP 1 119 923 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **99959177.9**

(22) Anmeldetag: **05.10.1999**

(51) Int Cl.$^7$: **H04B 1/707**

(86) Internationale Anmeldenummer:
**PCT/DE1999/003202**

(87) Internationale Veröffentlichungsnummer:
**WO 2000/021209 (13.04.2000 Gazette 2000/15)**

(54) **VERFAHREN ZUM EMPFANG VON SPREIZSPEKTRUMSIGNALEN**

METHOD FOR RECEIVING SPREAD-SPECTRUM SIGNALS

PROCEDE PERMETTANT DE RECEVOIR DES SIGNAUX A ETALEMENT DU SPECTRE

(84) Benannte Vertragsstaaten:
**FR GB**

(30) Priorität: **05.10.1998 DE 19845620**

(43) Veröffentlichungstag der Anmeldung:
**01.08.2001 Patentblatt 2001/31**

(73) Patentinhaber: **Koninklijke Philips Electronics N.V.**
**5621 BA Eindhoven (NL)**

(72) Erfinder: **AUE, Volker**
**D-01309 Dresden (DE)**

(74) Vertreter: **Patentanwälte**
**Lippert, Stachow, Schmidt & Partner**
**Krenkelstrasse 3**
**01309 Dresden (DE)**

(56) Entgegenhaltungen:
WO-A-97/06446         DE-A- 3 743 731

• LATVA-AHO M ET AL: "Quasi-coherent delay-locked loops for fading channels" 1996 IEEE 4TH INTERNATIONAL SYMPOSIUM ON SPREAD SPECTRUM TECHNIQUES AND APPLICATIONS PROCEEDINGS. TECHNICAL PROGRAM. (CAT. NO.96TH8210), PROCEEDINGS OF ISSSTA'95 INTERNATIONAL SYMPOSIUM ON SPREAD SPECTRUM TECHNIQUES AND APPLICATIONS, MAINZ, GERMANY, , Seiten 455-459 vol.1, XP002130709 1996, New York, NY, USA, IEEE, USA ISBN: 0-7803-3567-8

**Beschreibung**

Die Erfindung betrifft ein Verfahren zum Empfang von Spreizspektrumsignalen, bei dem aus einem mit einem Spreizcode kodiertem Sendesignal ein Empfangssignal empfangen und gefiltert wird. Danach wird in einem ersten Verfahrensteil in einem ersten RAKE-Finger das gefilterte Empfangssignal in einer On-Time-Korrelation mit einem konjugiert komplexen Spreizcode, der um eine Grund-Zeitverzögerung zum Spreizcode des Sendesignales verzögert ist, multipliziert und das Ergebnis in einem ersten Summierer summiert. Das Ergebnis der ersten Summation wird als Informationssignal ausgegeben und der Summierer zurückgesetzt. Das gefilterte Empfangssignal wird auf zwei alternative Wegen weiterbearbeitet. Auf dem ersten Weg wird das gefilterte Empfangssignal in einer Late-Korrelation mit dem konjugiert komplexen Spreizcode des Sendesignales Multipliziert, der um eine erste Grund-Zeitverzögerung und einer die erste Grund-Zeitverzögerung erhöhenden positiven Zusatz-Zeitverzögerung, zum Spreizcode (c(t)) des Sendesignales verzögert ist, und in einem zweiten Summierer summiert. Das gefilterte Empfangssignal wird in einer Early-Korrelation mit dem konjugiert komplexen Spreizcode multipliziert, der um die erste Grund-Zeitverzögerung und einer die erste Grund-Zeitverzögerung verringernden negativen Zusatz-Zeitverzögerung, zum Spreizcode (c(t)) des Sendesignales verzögert ist, und anschließend in einem dritten Summierer summiert. Anschließend wird ein Differenzergebnis als Differenz aus dem Ergebnis der Early- und der Late-Korrelation ermittelt und der zweite und dritte Summierer zurückgesetzt.

Auf dem zweiten Weg wird das gefilterte Empfangssignal mit der Differenz aus dem konjugiert komplexen Spreizcode, der um die erste Grund-Zeitverzögerung und der die erste Grund-Zeitverzögerung erhöhenden positiven Zusatz-Zeitverzögerung, zum Spreizcode des Sendesignales verzögert ist, und dem konjugiert komplexen Spreizcode, der um die erste Grund-Zeitverzögerung und der die erste Grund-Zeitverzögerung verringernden negativen Zusatz-Zeitverzögerung, zum Spreizcode des Sendesignales verzögert ist, multipliziert und in einem vierten Summierer summiert. Dadurch ist das Differenzergebnis gebildet. Nach dessen Weiterverarbeitung wird der vierte Summierer zurückgesetzt. Anschließend wird der Realteil des Produkts aus dem auf dem einen oder dem anderen Weg ermittelten Differenzergebnis und dem Informationssignal ermittelt als ein Fehlersignal und damit die Größe der Grundverzögerung gesteuert.

Parallel zum ersten Verfahrensteil werden in einem zweiten Verfahrensteil in einem zweiten RAKE-Finger die gleichen Verfahrensschritte mit einer zweiten Grund-Zeitverzögerung, die gegenüber der ersten Grund-Zeitverzögerung eine Differenz aufweist, durchgeführt und die Informationssignale der parallel durchgeführten Verfahrensteile zusammengefaßt.

Die Erfindung betrifft auch ein Verfahren mit dem gleichen Ablauf, bei dem jedoch das Empfangssignal nicht gefiltert wird sondern anstelle dessen mit einem gefilterten kojugiert komplexen Spreizcode multipliziert und die Produktsignale nicht summiert sondern integriert werden, wodurch die Korrelation erreicht ist.

Bei dem erfindungsgemäßen Verfahren werden RAKE-Empfänger eingesetzt, wie sie bei Price R., Green P. E. Jr., "A Communication Technique for Multipath Channels", Proc. IRE, vol 46, März 1958, Seiten 555-570, beschrieben sind. Der RAKE Empfänger ist eine Empfängeranordnung, die hervorragend für den Empfang von Spreizspektrumsignalen geeignet ist und dort Anwendung findet. Der konventionelle RAKE-Empfänger besteht aus einer Anzahl von Korrelatoren, die mit unterschiedlichem Zeitversatz das Spreizspektrumsignal entspreizen und das Schmalbandsignal zurückgewinnen.

Spreizspektrumtechniken der eingangs genannten Art, wie sie bei Pickholtz R. L., Schilling D. L., Milstein L. B., "Theory of Spread Spectrum Communications - A Tutorial", IEEE Transactions on Communications, vol. COM-30. Mai 1982, Seiten 855-884 und bei Alois M. J. Goiser, Handbuch der Spread-Spectrum-Technik, Springer. 1998 beschrieben sind, wurden in der Vergangenheit ausschließlich für militärische Anwendungen zur Verschlüsselung und Tarnung von Signalen und zur Erhöhung der Störfestigkeit verwendet. Dabei wird ein schmalbandiges zu übertragenes Signal durch Multiplikation mit einer breitbandigen pseudo-zufälligen Spreizfolge multipliziert. Die Elemente der Zufallsfolge werden als Chips bezeichnet. Das resultierende Signal ist ebenfalls breitrandig. Anders ausgedrückt, wird das zu sendende Signal, d.h. das Sendesignal mit einem Spreizcode kodiert.

Beim Empfänger wird dieses Sendesignal empfangen und sodann als Empfangssignal weiterverarbeitet. Nach zu einem durch das Sendesignal definierten Zeitpunkt wird im Empfänger die gleiche breitbandige pseudo-zufälligen Spreizfolge, wie sie zur Kodierung des Sendesignals verwendet wird, d.h. der Spreizcode des Sendesignales, erzeugt. Dies ist aufgrund des Charakters der Pseudozufälligkeit möglich, wodurch mit gleichen technischen Mitteln und Voraussetzungen die gleiche Pseudozufallsfolge erzeugt werden kann. Dem Sender und dem Empfänger müssen nur gegenseitig die Mittel und Voraussetzungen der Erzeugung der Pseudozufallsfolge bekannt sein.

Durch Multiplikation mit der konjugiert-komplexen Spreizfolge, wird dann das ursprüngliche schmalbandige Signal im Empfänger zurückgewonnen.

Im zellularem Mobilfunk, wo eine begrenzte Bandbreite verschiedenen Teilnehmern zur Verfügung gestellt werden muß, ist dieses Verfahren ebenfalls attraktiv. Hier werden einfach verschiedenen Teilnehmern verschiedene pseudo-zufällige Spreizfolgen zugeordnet. Für den Empfänger, der den Spreizcode des gewünschten zu detektierenden Teilnehmer verwendet, verhalten sich die Signale der anderen Teilnehmer wie Rauschen.

Die zu übertragene Information läßt sich am Empfänger wiedergewinnen, so lange die Gesamtleistung der störenden Signale verträglich ist.

Seit wenigen Jahren wird Spreizspektrum im amerikanischem Mobilfunkstandard "IS-95" mit Erfolg eingesetzt. Direct-Sequence Spreizspektrum ist als grundlegendes Verfahren für den Mobilfunkstandard der dritten Generation "IMT-2000" vorgeschlagen worden und es ist wahrscheinlich, daß der Mobilfunkstandard der dritten Generation auf diesem Verfahren beruhen wird, da es eine einfache und flexible Vergabe des Spektrums an verschiedene Teilnehmer mit unterschiedlichen Bandbreiteanforderungen erlaubt.

Im Mobilfunk gelangt das gesendete Signal einer Basisstation meist nicht direkt, sondern nur über Umwege durch Mehrfachreflexionen zum Empfänger. Das empfangene Signal zeichnet sich durch eine Überlagerung dieser Mehrfachreflexionen aus, die sich nur durch Betrag, Phase und die dem Ausbreitungsweg entsprechende Laufzeitverzögerung unterscheiden. Jede über Reflexionen zum Empfänger gelangte Signalkomponente setzt sich wiederum aus einer Reihe von einzelnen Signalen mit geringen Laufzeitunterschieden zusammen, so daß die über einen bestimmten Weg zum Empfänger gelangte Signalkomponente dem schnellen Schwund ausgesetzt ist.

Aufgrund der günstigen Korrelationseigenschaften der Spreizspektrumsignale lassen sich mit einem RAKE-Empfänger durch Korrelation mit entsprechend verzögerten pseudo-zufälligen Spreizfolgen gezielt einzelne Pfade (Signalkomponenten) eines Mehrwegesignals detektieren. Eine gemeinsame Verwendung der Korrelationsergebnisse gestattet eine zuverlässigere Rekonstruktion der Information des Sendesignals, als wenn nur ein einzelnes Korrelationsergebnis verwendet wird.

Herkömmliche Verfahren verwenden für jeden Korrelator eines RAKE-Empfängers einen Zeitfehlerschätzer, der durch Korrelation mit einem zusätzlichen positiven Zeitversatz und durch eine weitere Korrelation mit einem negativen zusätzlichen Zeitversatz, den Zeitversatz zum optimalen Zeitversatz für den lokalen Zufallscodegenerator schätzt, für den der eigentliche Korrelator die maximale Signalleistung aus der Mehrwegsignalkomponente gewinnt. Korrelator und Zeitfehlerschätzer sind oftmals in einer übergeordneten Einheit, die auch noch weitere Schätzer enthalten kann, zusammengefaßt und die als RAKE-Finger bezeichnet wird. Das beschriebene Verfahren zur zeitfehlerschätzung wird deshalb als Early-Late-Verfahren bezeichnet. Der geschätzte Zeitversatz wird vom RAKE Finger selbst oder von einer weiteren übergeordneten Einheit zur zeitlichen Nachführung, zur sogenannten zeitlichen Feinsynchronisation, benutzt.

Übliche zweckmäßige Implementierungen des Early-Late-Zeitfehlerschätzers kommen mit nur einem zusätzlichen Korrelator zur zeitfehlerschätzung aus. Das Empfangssignal wird zunächst durch ein Empfangsfilter bandbegrenzt. Das Empfangsfilter stellt ein Wurzel-Nyquist-Filter dar, daß auf den Sendeimpuls des breitbandigen Spreizsignals angepaßt ist.

Nach Abtastung mit der Chip-Rate wird zur Korrelation und Entspreizung nur noch eine Summation über die Produkte der abgetasteten Werte mit den entsprechenden Elementen der konjugiert komplexen Spreizfolge benötigt.

Das Ergebnis des Summierers wird alle N Werte ausgelesen und der Summierer zurückgesetzt, wobei N die Zahl der Werte darstellt, die auf ein Datensymbol entfallen. Der so gewonnene Wert für jede Summe von N Werten ist der Schätzwert des Informationssignals für den RAKE-Finger.

Für das Early-Late-Verfahren wird parallel zu dieser Korrelation mit einem Versatz eine Korrelation mit der Differenz bestehend aus dem um eine halbe Chip-Dauer verzögerten und um eine halbe Chip-Dauer vorauseilenden konjugiert komplexen Spreizcode durchgeführt. Der Realteil des Produkts aus diesem Korrelationsergebnis mit dem konjugiert komplexen Korrelationsergebnis für den Schätzwert des RAKE-Fingers liefert das Fehlersignal, daß zur zeitlichen Feinsynchronisation des RAKE-Fingers benutzt werden kann.

Die Feinsynchronisation wird in der Regel dadurch erreicht, daß das Fehlersignal durch ein schmalbandiges Filter geführt wird und das gefilterte Signal den lokalen Spreizcodegenerator steuert.

Nachteilig bei bekannten Verfahren zur zeitlichen Feinsynchronisation ist, daß die zur zeitfehlerschätzung verwendeten Early-Late-Verfahren zwar für Kanäle mit nur einem Pfad optimal sind, jedoch bei Mehrwegesignalen, die sich nur durch geringen zeitlichen Versatz (gering in Bezug auf die Taktrate der Zufallsfolge) unterscheiden, d.h. wenn sich die Differenzen der Umweglaufzeiten aufgrund der Bandbegrenztheit der Signale nicht mehr auflösen lassen, sehr störanfällig sind. Zum einen ist die Trägheit der sich in der Feinsychronisation befindlichen Regelschleifen auf die Veränderlichkeit der relativen Zeitversätze der Mehrwegesignale ausgelegt, nicht aber auf die Veränderlichkeit des durch Bewegung hervorgerufenen schnellen Schwundes, so daß bei schnellerer Bewegung ein Nachführen des optimalen Zeitversatzes nicht möglich ist. Zum anderen besteht die Möglichkeit, daß zeitlich benachbarte RAKE-Finger aufgrund des Mehrwegeprofils bei unabhängiger Regelung denselben zeitlichen Versatz finden. Dies ist in sofern nicht wünschenswert, als daß in diesem Fall keine zusätzliche Information aus dem Empfangssignal gewonnen wird. Von einer Korreliertheit der Ausgangsdaten der RAKE Finger kann bei einem relativen Zeitversatz von weniger als einer Taktdauer der Zufallsfolge ausgegangen werden. Bei bekannten Verfahren wird daher einer von zwei zeitlich benachbarten RAKE Fingern abgeschaltet, wenn eine zuvor festgelegte minimale zeitliche Differenz zwischen den RAKE-Fingern aufgrund der individuellen Feinsynchronisation unterschritten wurde. In bestimmten Fällen hätte sich aus einem weiteren RAKE Finger mit dem erlaubten minimalen zeitlichen Versatz durchaus noch Information gewinnen lassen können.

Es ist somit Aufgabe der Erfindung, ein Verfahren zum Empfang von Spreizspektrumsignalen anzugeben, mit dem aus dem Empfangssignal das zu übertragende Signal mit einem größtmöglichen Signal-Rausch-Abstand erzeugt werden kann.

Gemäß der Erfindung wird diese Aufgabe dadurch gelöst, am Verfahrensanfang der Betrag der Differenz aus der ersten und der zweiten Grund-Zeitverzögerung größer ist als eine Mindestdifferenz und daß bei Erreichen der Mindestdifferenz während des Verfahrensablaufs durch die Differenz aus der ersten und der zweiten Grund-Zeitverzögerung das Fehlersignal des ersten Verfahrensteiles und des zweiten Verfahrensteiles addiert wird. Diese Summe wird als neues Fehlersignal zur Steuerung der Grundverzögerung in beiden Verfahrensteilen genutzt.

Der Vorteil der erfindungsgemäßen Anordnung besteht darin, daß bei Kanälen, bei denen die Laufzeitdifferenzen der Mehrwegepfade in etwa der Chip-Dauer entsprechen oder darunter liegen, d.h., nicht mehr vom Empfänger aufgelöst werden können, immer noch mehrere RAKE-Finger genutzt werden können, um mehr Information aus dem Empfangssignal über das Sendesignal zu gewinnen, als daß es mit herkömmlichen Verfahren möglich ist. D.h., die in den Mehrwegesignalkomponenten enthaltene Information läßt sich auch dann noch effektiv ausnutzen, wenn ein genaues Bestimmen der Pfade aufgrund der Laufzeitunterschiede nicht mehr möglich ist. Der mittlere Synchronisationsfehler fällt für die erfindungsgemäße Anordnung geringer aus.

Die Varianz des Zeitversatzes für eine Gruppe von RAKE-Fingern bei nicht auflösbaren Mehrwegesignalen ist durch das erfindungsgemäße Feinsynchronisationsverfahren geringer, als es bei einem einzelnen RAKE-Finger in diesem Fall ist.

Das Verfahren findet den zeitlichen Versatz für die Gruppe von RAKE-Fingern, für die Maximal-Ratio-Combining (MRC) als Verfahren zur Zusammenführung der Korrelationsergebnisse der RAKE Finger, den maximalen Signal-Störabstand liefert. MRC ist das Verfahren, daß den maximalen Signal-Störabstand beim Zusammenführen von Eingangssignalen mit unkorreliertem Rauschen liefert.

Das Verfahren ist nicht-kohärent, d.h., eine Information der Trägerphase wird zur Feinsynchronisation nicht benötigt. Damit ist das Verfahren nicht auf weitere Kanalschätzverfahren angewiesen, deren Funktion in Mehrwegeschwundkanälen nicht immer gewährleistet sein muß. Das Verfahren ist für kohärente und nicht-kohärente Übertragungsverfahren gleichermaßen geeignet.

Das Verfahren basiert auf einem nicht-kohärenten Verfahren zum Finden des optimalen Zeitversatzes eines Korrelators bei Nichtvorhandensein von Mehrwegeausbreitung, das mit nur einem zusätzlichen Korrelator auskommt (Bild 1). Darüber hinaus wird mit dem Differenzcode korreliert, der bei Direct-Sequence Spreizspektrum im Mittel aus 50 Prozent Nullen besteht, was eine Implementierung ermöglicht, bei der die Leistungsaufnahme bis zu 50 Prozent reduziert ist.

In einer günstigen Ausgestaltung des erfindungsgemäßen Verfahrens ist vorgesehen, das die Mindestdifferenz einer Chipdauer entspricht.

Damit ist das Rauschen der Informationssignale in beiden verfahrensteilen unkorreliert.

In einer weiteren Ausgestaltung des erfindungsgemäßen Verfahrens ist vorgesehen, daß bei einer Reduzierung einer ursprünglich großen Differenz zwischen der ersten und der zweiten Grund-Zeitverzögerung während des Verfahrensablaufes auf die Mindestdifferenz, der erste und der zweite RAKE Finger gruppiert werden. Die Verfahrensschritte werden fortan gemeinsam für die Gruppe durchgeführt.

Dabei ist es möglich, das erfindungsgemäße Verfahren dadurch fortzubilden, daß ein RAKE-Finger aus der Gruppe entfernt wird wenn sich bei der Abarbeitung der Verfahrensschritte die Differenz zwischen der ersten und der zweiten Grund-Zeitverzögerung auf einen Wert größer als die Mindestdifferenz einstellt.

Weiterhin ist es möglich, daß eine Gruppe von Beginn der Verfahrensabarbeitung an unabhängig von der Differenz zwischen erster und zweiter Grund-Zeitverzögerung initiiert wird.

Damit können Informationen von benachbarten Mehrwegpfaden von vornherein ausgenutzt werden.

Dabei ist zu erwarten, daß durch die Gruppierung die Varianz des Regelsignals merklich reduziert ist, was aufgrund der verbesserten Ausnutzung des Mehrwegekanals durch die Anordnung erklärt werden kann. Hierzu ist in einer weiteren Ausgestaltung des Verfahrens vorgesehen, daß zu einem ersten RAKE-Finger ein zweiter RAKE-Finger, dessen Grundverzögerung sich um den Mindestabstand zum ersten RAKE-Finger unterscheidet, hinzugefügt wird, wodurch der erste und der zweite RAKE-Finger eine Gruppe bilden oder ein dritter RAKE-Finger mit Mindestabstand zu einer Gruppe von RAKE-Fingern hinzugefügt wird, wodurch sich die Zahl der RAKE-Finger in einer Gruppe erhöht.

Es ist wahrscheinlich, daß benachbarte Mehrwegepfade nicht immer von der Akquisitionseinheit erkannt werden und zunächst nur ein einzelner RAKE-Finger zur Detektion für diese Pfade verwendet wird. Aufgrund der durch den schnellen Schwund hervorgerufenen Veränderlichkeit des Kanals ist in diesem Fall mit einer erhöhten Varianz des Zeitfehlersignals bzw. des Zeitversatzes des RAKE-Fingers zu rechnen. Durch eine Beobachtung (Messung) dieser Varianz wird es möglich, eng benachbarte Mehrwegeausbreitung zu erkennen. Damit kann ein weiterer RAKE-Finger, dessen Grundverzögerung sich um den Mindestabstand zum ersten unterscheidet, dem ersten zugewiesen werden, wodurch beide RAKE-Finger eine Gruppe bilden und das gewünschte Ergebnis erzielt ist.

Die Erfindung soll nachfolgend anhand zweier Ausführungsbeispieles näher erläutert werden. In den zugehörigen Zeichnungen zeigt

Fig. 1a ein Beispiel einer Impulsantwort mit auflösbarem Mehrwegprofil nach dem Stand der Technik,

Fig. 1b ein Beispiel für eine Impulsantwort mit nichtauflösbarem Mehrwegprofil nach dem Stand der Technik,

Fig. 1c ein gleiches Beispiel für eine Impulsantwort wie in Fig. 1b mit anderen Phasen

Fig. 2 eine tabellarische Übersicht über die im Beispiel zum Stand der Technik benutzte relative Pfadverzögerungen und Kanalkoeffizienten,

Fig. 3 die Darstellung eines Early-Late-Feinsynchronisationsverfahren nach dem Stand der Technik

Fig. 4 eine Darstellung einer Ableitung und Näherung eines Cosinusimpulses mit 22 % Roll-Off nach dem Stand der Technik,

Fig. 5 eine Darstellung der Amplitude einer Impulsantwort eines Kosinusimpulses mit 22% Roll-Off nach dem Stand der Technik,

Fig. 6 ein Blockdiagramm einer Basisimplementierung eines RAKE-Empfängers,

Fig. 7 ein prinzipielles Blockdiagramm der Basisbandimplementierung des RAKE-Empfängers,

Fig. 8 eine Darstellung eines Early-Late-Feinsynchronisationsverfahren mit einer Korrelation mit dem zeitkontinuierlichen Spreizcode und

Fig. 9 eine Darstellung eines auf einer Pilotsequenz basierenden, kohärenten RAKE Empfängers mit zweifacher Antennen-Diversity für Quadratur-Phase-Shift-Keying (QPSK).

Vor der Beschreibung der Ausführungsbeispiele soll das Verfahren nach dem Stand der Technik beispielhaft anhand eines Systemmodells näher erläutert werden:

$$s(t) = \mathrm{Re}\{v(t)e^{j\omega_c t + \phi c}\} \tag{1}$$

Das Sendesignal s(t) sei

wobei $\omega_c$ die Trägerfrequenz, $\phi_c$ ein Phasenversatz definieren und v(t) das komplexe zu sendende Basisbandsignal ist.

$$v(t) = \sqrt{2P} \sum_{n=-\infty}^{\infty} c_n g_c(t - nT_c) \tag{2}$$

$c_n$ sind die Chips mit $|c|=1 \cdot g_c(t)$ ist die Impulsantwort eines Wurzelnyquistimpulsformungsfilters (z.B. eines Wurzelkosinusfilters) mit Autokorrelationsfunktion

$$R_c(\tau) = \int_{-\infty}^{\infty} g_c^{*}(t) g_c(t + \tau) dt \tag{3}$$

Das Rauschen ñ(t), welches am Empfänger anliegt, wird durch

$$\tilde{n}(t) = [\tilde{n}_I(t)\cos(\omega_c t) - \tilde{n}_Q(t)\sin(\omega_c t)] \tag{4}$$

beschrieben wobei $\tilde{n}_I(t)$ und $\tilde{n}_Q(t)$ zwei unabhängige mittelwertfreie Gaußprozesse mit einseitiger spektraler Leistungsdichte $N_0$ W/Hz sind. Es wird davon ausgegangen, daß das am Empfänger anliegende Signal durch das Empfangsfilter geführt wird und in das Basisband gemischt wird. Das Empfangsfilter ist ein der Impulsform eines Chips angepaßtes Filter mit $g_c(-t)$ als Impulsantwort. Darüber hinaus sei $\xi(\tau)$ die Kanalimpulsantwort eines im weiten Sinn stationären Kanals mit unkorrelierten Überlagerungen (WSSUS),

$$\xi(\tau) = \sum_{i=1}^{P} \xi_i \delta(\tau - \tau_i) \tag{5}$$

$h(\tau)$ definiere die gesamte Impulsantwort unter Einbeziehung von Sende- und Empfangsfilter, d.h.,

$$h(\tau) = \sum_{i=1}^{P} \xi_i R_c(\tau - \tau_i) \tag{6}$$

Das empfangene durch das Chip-Matched-Filter geführte Signal ist

$$r(t) = \sqrt{2P} \sum_{n=-\infty}^{\infty} \sum_{i=1}^{P} c_n R_c(t - nT_c - \tau_i) e^{j\phi_c} + n(t) \tag{7}$$

wobei

$$n(t) = n_I(t) + jn_Q(t) \tag{8}$$

$n_I(t)$ und $n_Q(t)$ zwei unabhängige mittelwertfreie Gaußprozesse mit beidseitiger spektraler Leistungsdichte $N_0/2$ G(f) und Autokorrelationsfunktion $N_0/T_c R_c(\tau)$ sind.

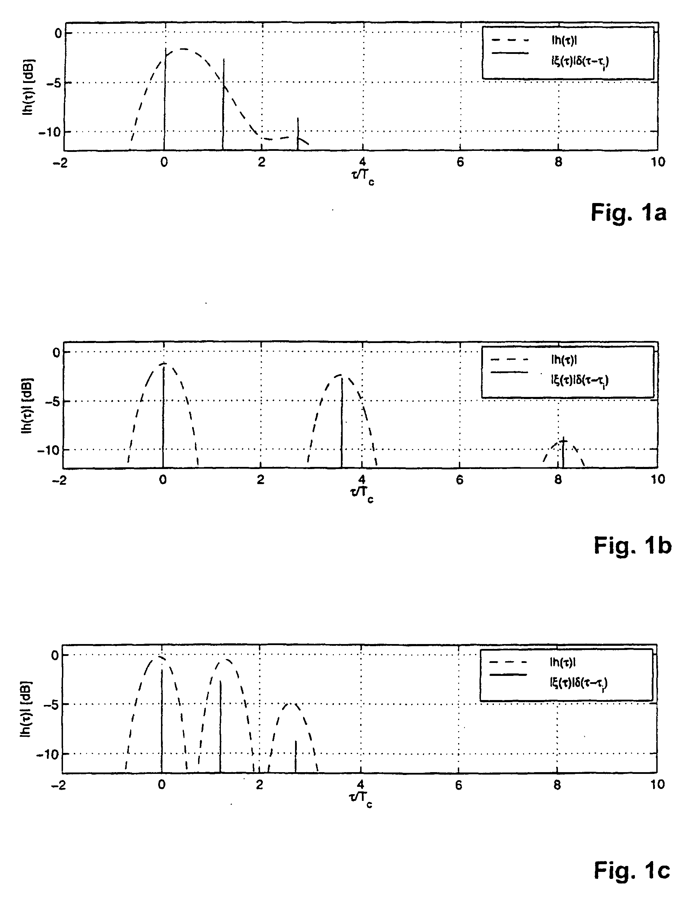

Ein Beispiel für eine Impulsantwort, die aus drei Pfaden besteht, ist in Fig. 1a dargestellt. Die entsprechende Kanalimpulsantwort $h(\tau)$ ist ebenfalls dargestellt wobei ein Wurzelkosinusfilter mit 22 Prozent Roll-Off-Faktor als Sende- und Empfangsfilter benutzt wurde.

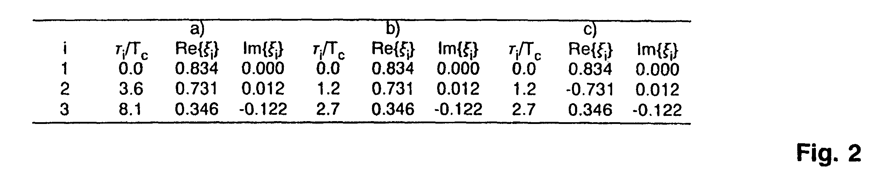

Die Verzögerungen und komplexen Kanalkoeffizienten $\xi_i$ sind in Fig 2 aufgeführt. Es ist offensichtlich, daß ein Early-Late-Verfahren zur Feinsynchronisation mit einem Versatz von $\Delta <= T_c$ angewendet werden kann, um die Verzögerungen $\tau_i$ nachzuführen. Die meisten Early-Late-Synchronisationsverfahren benutzen $\Delta = T_c/2$, aber auch andere Werte sind möglich.

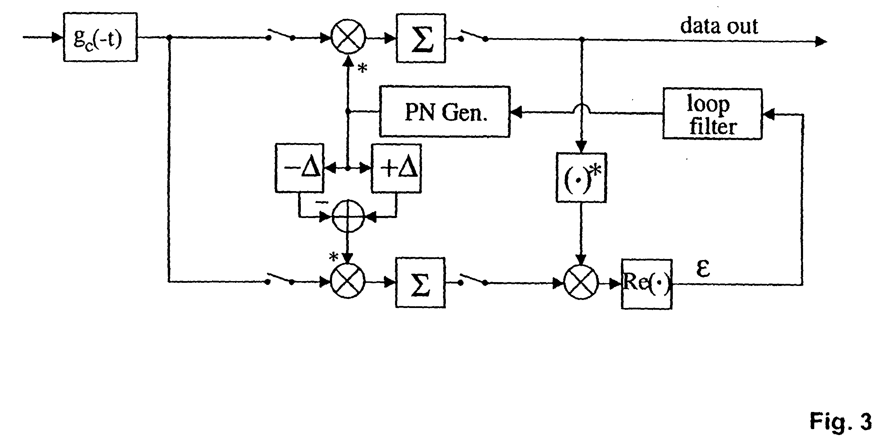

Ein Early-Late-Fehlerschätzer, der nur einen zusätzlichen Korrelator benötigt, ist in Fig. 3 dargestellt und wird oft als Dot-Product-Discriminator bezeichnet. Das Empfangssignal wird hierbei mit der Differenz aus dem um $T_c/2$ verzögerten und $T_c/2$ voreilenden Code korreliert. Die Abhängigkeit des Ergebnisses von der Kanalphase wird durch nachfolgende Multiplikation mit dem konjugiert komplexen Korrelationswert des unverzögerten Codes eliminiert. In der in Fig. 3 gezeigten Implementierung wird das Signal zunächst durch ein als loop filter bezeichnetes Chip-Matched-Filter geführt und dann im Chiptakt abgetastet. Der Realteil des Produkts aus Differenzcode und unverzögerter Codekorrelation ist das Fehlersignal $\varepsilon$, welches anschließend durch das sogenannte Schleifenfilter geführt wird und die Phase des Codegenerators steuert. In einem flachen Kanal kann die Struktur dieses Early-Late-Fehlerschätzers aus der Problemstellung zur Empfangsleistungsmaximierung am Ausgang des unverzögerten Codekorrelators motiviert werden. Die Ausgangssignalleistung $P_s$ des unverzögerten Codekorrelators ist

$$P_s(\varepsilon) = 2P|\xi|^2 N_{PG}^2 |R_c(-\varepsilon)|^2 \tag{9}$$

wobei $N_{PG}$ den Spreizfaktor definiert. Die notwendige und hinreichende Bedingung für ein maximales $P_s$ für $-T_c < \varepsilon < T_c$

lautet

$$\frac{d}{d\varepsilon} P_s(\varepsilon) = 0 \qquad (10)$$

Die Ableitung von $P_s$ nach $\varepsilon$ lautet

$$\frac{d}{d\epsilon} P_s(\epsilon) = -4PN_{PG}^2 \ |\xi|^2 R_c^*(-\epsilon) \frac{d}{d\epsilon} R_c(-\epsilon)$$
$$= -4PN_{PG}^2 \ |\xi|^2 R_c^*(-\epsilon) \lim_{\delta \to 0} \frac{R_c(-\epsilon + \delta) - R_c(-\epsilon - \delta)}{2\delta} \qquad (11)$$

Der linke Teil von Gleichung (11) ist das konjugiert komplexe Korrelationssignal des unverzögerten Codes. Der Grenzwert läßt sich durch den Differenzenquotienten

$$\lim_{\delta \to 0} \frac{R_c(-\epsilon + \Delta) - R_c(-\epsilon - \delta)}{2\delta} \approx \frac{R_c(-\epsilon + \Delta) - R_c(-\epsilon - \Delta)}{2\Delta} \qquad (12)$$

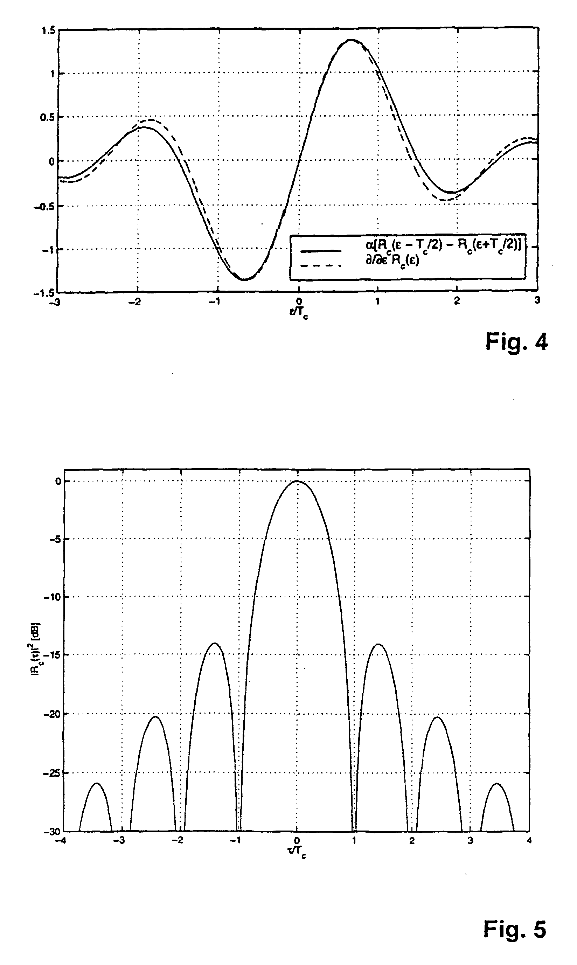

annähern, welcher sich durch Korrelation mit dem Differenzcode erhalten läßt. Die Ableitung und die Approximation mit Hilfe des Differenzenquotienten ist in Fig. 4 für einen Kosinusimpuls mit 22 Prozent Roll-Off und $\Delta = T_c/2$ beispielhaft dargestellt.

Das Rauschen der Korrelatorausgänge kann für die Laufzeitverzögerungen der Pfade nach Fig. 1a als unkorreliert angenommen werden, so daß eine Mehrwegezusammenführung nach dem Prinzip des Maximal-Ratio-Combinings möglich ist.

Der Betrag der Autokorrelationsfunktion $R_c(\tau)$ ist in Fig. 5 dargestellt. Für $|\tau| > 0.85 T_c$ ist der Betrag von $R_c(\tau)$ kleiner als -14 dB, d.h., für die entsprechende Sende- und Empfangsfilterpaar kann das Rauschen nach dieser Verzögerung als praktisch unkorreliert angenommen werden, wenn für alle $|\tau_i - \tau_j| >= 0.85 T_c$ mit $i<>j$ und $1<=i$, $j<p$ gilt. Für $|\tau_i - \tau_j| = nT_c$, $n$ integer, ist das Rauschen unkorreliert, da $R_c(nT_c) = 0$ ist.
Eine Kanalimpulsantwort, bei der sich die Mehrwegpfade nicht auflösen lassen, ist in Fig. 1b dargestellt, wobei die Koeffizienten aus Fig. 1a beibehalten wurden. Die relativen Zeitverzögerungen wurden hingegen um den Faktor drei gestaucht. Wenn zunächst mehrere RAKE-Finger diesem Kanalprofil zugewiesen werden und die zeitliche Feinsynchronisation unabhängig für jeden RAKE-Finger durchgeführt wird, dann findet jeder RAKE-Finger unabhängig von einander das Korrelationsmaximum bei $0.35\ T_c$. Offensichtlich lassen sich für diese kurzen relativen Verzögerungen die Ausgänge der RAKE-Finger nicht mehr als unabhängig ansehen. Eine Dekorrelation der RAKE-Finger durch Multiplikation mit der Inversen der Korrelationsmatrix ist zwar möglich, bedeutet aber einen nicht zu vernachlässigen Rechenaufwand.

Darüber hinaus ist die Korrelationsmatrix um so schlechter konditioniert, je geringer der relative Zeitversatz der RAKE-Finger ist. Eine schlecht konditionierte Matrix kann zu Stabilitätsproblemen und einer verringerten Leistungsfähigkeit des Empfängers führen. Bei herkömmlichen Empfängern vereinigt ein Regelkreis deshalb RAKE-Finger, wenn die zeitlich Differenz zwischen den Fingern kleiner als ein zuvor vorgegebener Minimalabstand wird. Dies geschieht i. d.R. derart, daß der RAKE-Finger, der die meiste Signalleistung empfängt, belassen wird, und der RAKE-Finger, der weniger Signalleistung empfängt, aus dem Detektionsprozess herausgenommen wird. Dieser kann dann anderen Mehrwegepfaden neu zugeordnet werden.

Wird jedoch nur ein RAKE-Finger benutzt, um das Signal aus der Impulsantwort nach Fig. 1b zu detektieren, geht dem Empfänger unweigerlich Signalleistung verloren. Darüber hinaus wird die Synchronisation durch die Mehrwegeausbreitung gestört. Üblicherweise ist die zeitliche Veränderlichkeit der Amplitudenwerte und Phasen der Kanalkoeffizienten $\xi_i$ erheblich größer, als es bei den relativen Zeitverzögerungen $\tau_i$ der Mehrwegepfade der Fall ist.

Wenn sich die einzelnen Mehrwegepfade nicht mehr zeitlich auflösen lassen, so tragen sie konstruktiv oder destruktiv zur gesamten Kanalimpulsantwort bei, was wiederum eine schnelle zeitliche Veränderlichkeit der Position der Maxima der Kanalimpulsantwort zur Folge hat.

Um dieses Verhalten zu veranschaulichen, wurde die Phase des Kanalkoeffizienten $\xi_2$ um 180 Grad gedreht und die resultierende Kanalimpulsantwort in Fig. 1c dargestellt. Synchronisationsparameter wie die Bandbreite der Regelschleife usw. sind jedoch auf die zeitliche Veränderlichkeit der relativen Verzögerung eines bestimmten Pfads abgestimmt, nicht aber auf den schellen Schwund. Damit wird deutlich, daß in dem Fall, in dem die Dopplerbandbreite die Bandbreite der Regelschleife übersteigt, eine weitere Verminderung der Leistungsfähigkeit des Empfängers bedingt durch das Unvermögen des Synchronisationsverfahrens, mit der schnellen Veränderlichkeit des Kanals schrittzuhalten, gerechnet werden kann.

Das erfindungsgemäße Verfahren zur Feinsynchronisation, wie es in den beiden nachfolgenden Ausführungsbeispielen erläutert wird, das für nichtauflösbare Mehrwegeausbreitungskanäle geeignet ist und diese immer noch ausnutzen kann, besteht aus einer Zahl von RAKE-Finger, welche einen Korrelator für den zeitrichtigen Schätzwert $r_i$ und einen Zeitfehlerschätzer nach Fig. 3 enthalten. Solange der Abstand von Mehrwegepfaden groß in bezug auf die Chipdauer ist, wird die zeitliche Feinsynchronisation für jeden RAKE-Finger unabhängig durchgeführt. Wenn sich jedoch der Abstand der Mehrwegepfade in der Größe der Chipdauer bewegt oder kleiner als diese ist, wird eine Gruppe von RAKE-Fingern mit gleichem zeitlichen Versatz diesen zugeordnet, wobei der Abstand der RAKE-Finger der minimal zugelassene Abstand im RAKE-Empfänger ist.

Die Feinsynchronisation wird dann gemeinsam für diese Gruppe durchgeführt, um die optimale zeitliche Einstellung der Pseudorauschfolge unter Beibehaltung des zeitlichen Versatzes der RAKE-Finger zu finden. Zunächst wird davon ausgegangen, daß der minimal zugelassene Abstand die Chipdauer $T_c$ ist, für die Werte $r_i$ unkorreliert sind und damit Maximal-Ratio-Combining zur Mehrwegezusammenführung möglich ist. In jedem Fall stellt eine Kontrolleinheit während der Feinsynchronisation sicher, daß der Abstand zwischen RAKE-Finger niemals den minimal erlaubten Abstand unterschreitet. Ist ein ursprünglich großer Abstand zwischen zwei RAKE Fingern während der Feinsynchronisation auf den minimalen Abstand reduziert worden, dann werden die RAKE Finger gruppiert und die Feinsynchronisation fortan gemeinsam für die Gruppe durchgeführt. Im folgenden wird gezeigt, daß sich unter Verwendung des Early-Late-Schätzers aus Fig. 3 in jedem RAKE-Finger sich das Gesamtzeitfehlersignal für eine Gruppe von L RAKE-Fingern sich einfach aus der Summe der Einzelzeitfehlersignale aus allen sich in einer Gruppe befindlichen RAKE-Fingern ergibt.

Der i-te komplexe Kanalkoeffizient $h_i$ vom i-ten RAKE-Finger ist der Abtastwert von $h(\tau)$ zum Zeitpunkt $iT_c$-$\varepsilon$, wobei $\varepsilon$ den zu optimierenden Versatz darstellt. Es ist

$$h_i(-\varepsilon) = h(iT_c - \varepsilon) \tag{13}$$

Da die Rauschleistung als konstant für jeden RAKE-Finger angenommen werden kann, besteht die Aufgabe der Feinsynchronisationseinheit darin, den Versatz zu finden, der die maximale Signalausgangsleistung liefert. Die Signalleistung $P_s(\varepsilon)$ nach der Mehrwegezusammenführung ist direkt proportional zu der Summe über die Betragsquadrate der Kanalkoeffizienten, d.h.,

$$P_s(\varepsilon) = c \sum_{i=0}^{L-1} |h_i(-\varepsilon)|^2 \tag{14}$$

wobei c eine Konstante ist. Die notwendige Bedingung dafür, daß $P_s(\varepsilon_0)$ maximal ist, ist daß die Ableitung von $P_s$ für den Versatz $\varepsilon_0$ gleich null ist. Die Ableitung von (14) bzgl. $\varepsilon$ ist

$$\begin{aligned}
\frac{d}{d\varepsilon} P_s(\varepsilon) &= -c \sum_{i=1}^{L-1} h_i^*(-\varepsilon) \frac{d}{d\varepsilon} h_i(-\varepsilon) \\
&= -\sum_{i=1}^{L-1} h_i^*(-\varepsilon) \lim_{\delta \to 0} \frac{h_i(-\varepsilon + \delta) - h_i(-\varepsilon - \delta)}{2\delta}
\end{aligned} \tag{15}$$

wobei der Grenzwert durch den Differenzenquotienten

$$\lim_{\delta \to 0} \frac{h_i(-\varepsilon + \delta) - h_i(-\varepsilon - \delta)}{2\delta} \approx \frac{h_i(-\varepsilon + \Delta) - h_i(-\varepsilon - \Delta)}{2\Delta} \tag{16}$$

genähert werden kann. Unabhängig davon stellt (15) die Summe über alle Fehlerschätzwerte der einzelnen RAKE-Finger dar. Es kann also gefolgert werden, daß die Summe der Fehlerschätzwerte jedes einzelnen RAKE-Fingers einer aus L RAKE-Fingern bestehenden Gruppe, daß gesuchte Fehlersignal zur Feinsynchronisation der Gruppe darstellt.

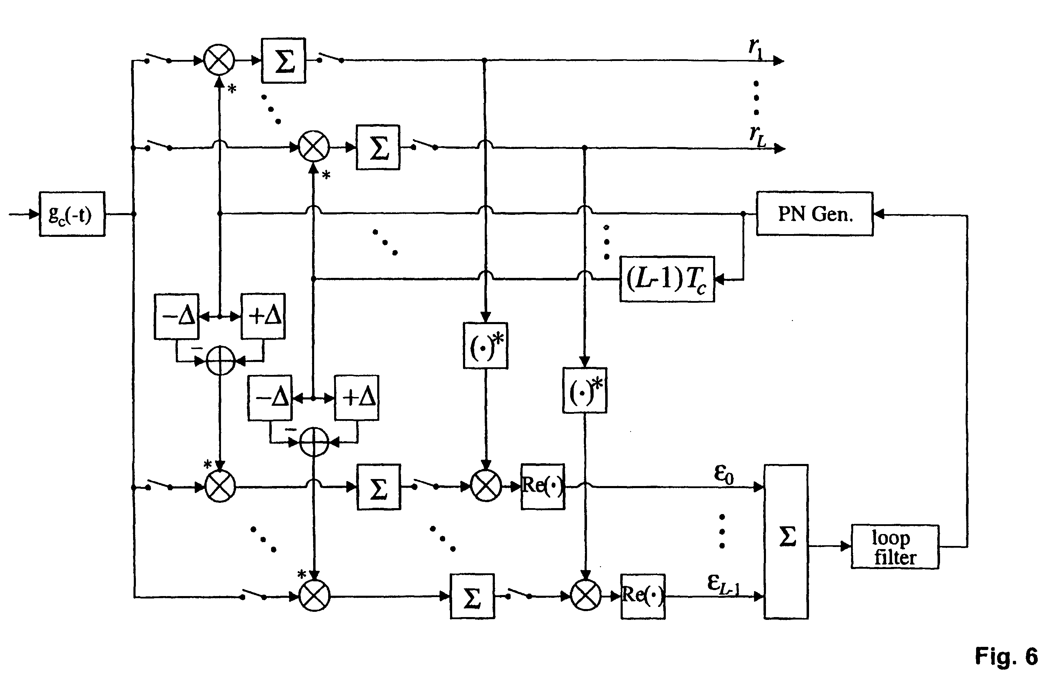

Fig. 6 zeigt den vorgestellten RAKE-Empfänger für eine aus L Fingern bestehenden Gruppe. Der Early-Late Versatz ist $2\Delta = T_c$. Das zusammengeführte Fehlersignal der Gruppe wird durch das gemeinsame Schleifenfilter geführt, dessen Ausgangssignal den Pseudorauschgenerator der Gruppe steuert.

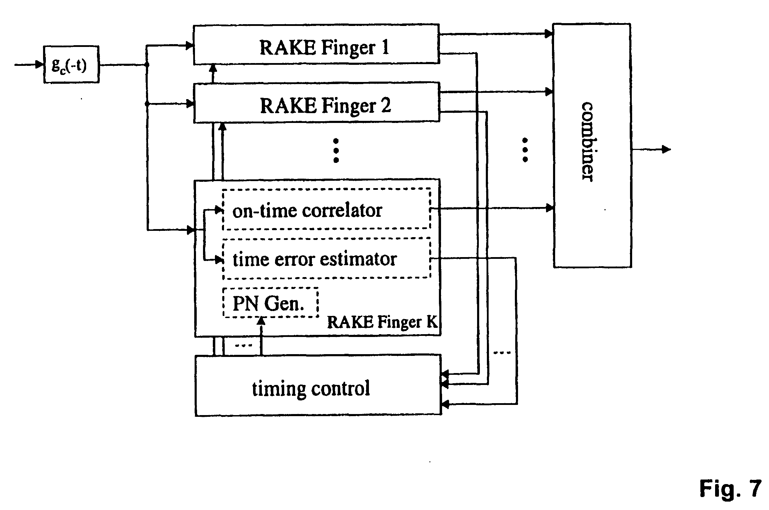

In dem ersten Ausführungsbeispiel zeigt Fig. 7 das prinzipielle Blockdiagramm der Basisbandimplementierung des RAKE-Empfängers.

Es wird davon ausgegangen, daß das empfangene Signal bereits ausreichend verstärkt wurde und mit Hilfe eines IQ-Demodulators in das Basisband konvertiert wurde und als komplexwertiges Basisbandsignal vorliegt. Dieses Signal wird nun zunächst durch das Chip-Matched-Filter geführt, welches K RAKE-Fingern zur Verfügung gestellt wird. Jeder RAKE-Finger enthält einen Korrelator, mit dem mit einem bestimmten Zeitversatz, (der Zeitverzögerung des RAKE-Fingers) eine Korrelation mit dem Signal durchgeführt wird ("On-Time" Korrelation). Dies geschieht dadurch, daß das Signal mit der gewünschten Zeitverzögerung zunächst im Chiptakt abgetastet wird. Die Abtastwerte werden dann mit dem konjugiert komplexen Spreizcode (PN-Code) multipliziert und die Mittelwerte über die einem schmalbandigen Datensymbol entsprechenden Werte gebildet. Die Mittelwerte sind die Schätzwerte für das Datensymbol des jeweiligen RAKE-Fingers. Der Spreizcodegenerator jedes RAKE-Fingers hat eine unterschiedliche Zeitverzögerung zum Eingangssignal. Die von den RAKE-Fingern unabhängig gelieferten Schätzwerte eines Datensymbols werden dann im "Combiner" zusammengeführt, wobei Maximal-Ratio-Combining (MRC) benutzt wird. Jeder RAKE-Finger liefert neben dem soeben beschriebenen Korrelationswert zur Gewinnung des Schätzwertes für das Datensymbol, einen Zeitfehlerschätzwert. Der Zeitfehlerschätzwert ist ein Schätzwert für die Differenz zwischen dem aktuellen Zeitversatz des lokalen PN-Generators des RAKE-Fingers zum Eingangssignal und dem optimalen Zeitversatz. Zur Bildung dieses Schätzwerts für den Zeitfehler wird eine Korrelation mit dem der On-Time-Korrelation um eine bestimmte relative Zeitverzögerung $\Delta$ vorauseilenden Code (Early-Schätzung) und eine weitere Korrelation mit dem um $\Delta$ verzögerten Code (Late-Schätzung) durchgeführt. Dabei entsprechen $2\Delta$ in der Regel der Chipdauer. Es sind aber auch andere Werte möglich.

Danach wird die Differenz zwischen dem Late und Early-Schätzwert gebildet. Dieses Ergebnis kann auch durch eine einzelne Korrelation mit dem Differenzcode bestehend aus der Differenz zwischen dem um $\Delta$ verzögerten und $\Delta$ vorauseilendem Code durchgeführt werden. Anschließend wird der Realteil des Produkts zwischen diesem Ergebnis und dem konjugiert komplexen Schätzwert der On-Time-Korrelation gebildet. Der so gewonnene Wert ist der Zeitfehlerschätzwert für das entsprechende Datensymbol und wird als Zeitfehlersignal aus dem RAKE-Finger herausgeführt. Für den Fall, daß sich die relative Zeitverzögerung eines betrachteten RAKE-Fingers um mehr als einen minimalen zeitlichen Abstand von den Zeitverzögerungen der anderen RAKE-Finger unterscheidet, wird dieses Signal zur Steuerung der Zeitverzögerung des PN-Codes des RAKE-Fingers verwendet, indem es lediglich zur Unterdrückung von Rauscheinflüssen nur noch durch ein schmalbandiges Filter geführt wird.

Das Filter kann sich auch in der zeitlichen Feinsynchronisationseinheit (timing control) befinden. Das Filter ist so auszulegen, daß die Stabilität der Regelschleife gewährleistet ist. Die so beschriebene Anordnung für einen RAKE-Finger ist bereits in Fig. 3 dargestellt.

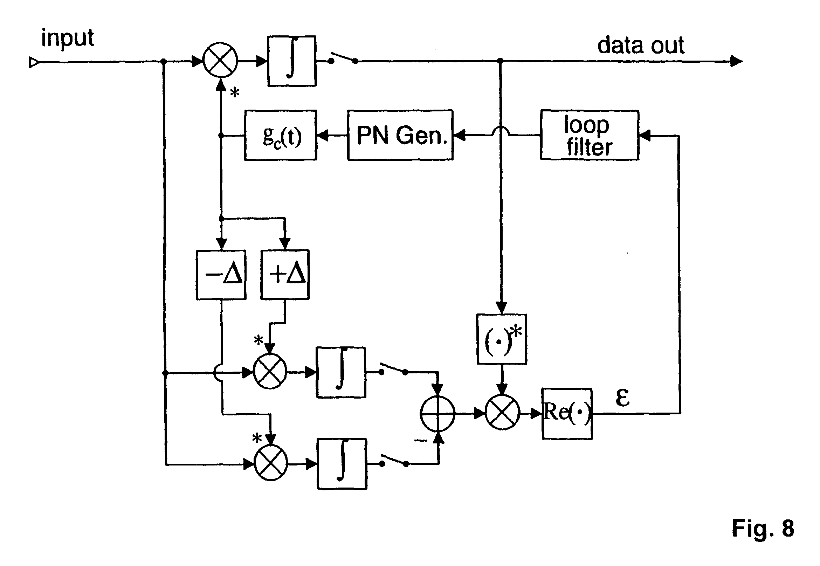

Alternativ dazu ist es möglich, die Korrelation mit dem zeitkontinuierlichen Spreizcode vorzunehmen, wie dies in Fig. 8 dargestellt ist. Der zeitkontinuierliche Code wird durch eine Pulsformung der Chipfolge durch Filterung mit dem Pulsformungsfilter erzeugt. Analog zu Fig. 3 werden hier die Signale im zeitkontinuierlichen multipliziert und entsprechend der Symboldauer integriert. Der Integrationswert wird nach der Symboldauer ausgelesen.

Die Feinsynchronisationseinheit hat die Möglichkeit, auf den Zeitversatz jedes einzelnen RAKE-Fingers Einfluß zu nehmen. Darüber hinaus sind ihr die relativen Zeitverzögerungen aller RAKE-Finger bekannt.

Wenn sich der Abstand der Mehrwegepfade in der Größe der Chipdauer bewegt oder kleiner als dieser ist, wird eine Gruppe von RAKE-Fingern mit gleichem zeitlichen Versatz diesen zugeordnet, wobei der Abstand der RAKE-Finger der minimal zugelassene Abstand im RAKE-Empfänger ist. Die Feinsynchronisation wird dann gemeinsam für diese Gruppe durchgeführt, um die optimale zeitliche Einstellung der Pseudorauschfolge unter Beibehaltung des zeitlichen Versatzes der RAKE-Finger zu finden.

Zunächst wird davon ausgegangen, daß der minimal zugelassene Abstand die Chipdauer $T_c$ ist, für den die Werte $r_i$ unkorreliert sind und damit Maximal-Ratio-Combining zur Mehrwegezusammenführung möglich ist. In jedem Fall stellt eine Kontrolleinheit im "Timing Controller" während der Feinsynchronisation sicher, daß der Abstand zwischen RAKE-Fingern niemals den minimal erlaubten Abstand unterschreitet. Ist ein ursprünglich großer Abstand zwischen zwei RAKE Fingern während der Feinsynchronisation auf den minimalen Abstand reduziert worden, dann werden die RAKE Finger gruppiert und die Feinsynchronisation fortan gemeinsam für die Gruppe durchgeführt. Das Gesamtzeitfehlersignal für eine Gruppe von L RAKE-Fingern ergibt sich dabei aus der Summe der Einzelzeitfehlersignale aus allen sich in einer Gruppe befindlichen RAKE-Fingern. Dieses Gesamtfehlersignal wird dann durch ein gemeinsames Schmalbandfilter geführt und zur Steuerung des relativen Zeitversatzes der Gruppe durch Einflußnahme auf die Zeitversätze aller in der Gruppe befindlichen PN-Generatoren verwendet.

Es ist auch möglich, die Spreizcodes für alle in einer Gruppe beteiligten RAKE-Finger von einem gemeinsamen PN-Generator abzuleiten. Die Anordnung für diesen Fall für eine Gruppe von L RAKE-Fingern ist bereits in Fig. 6 dargestellt.

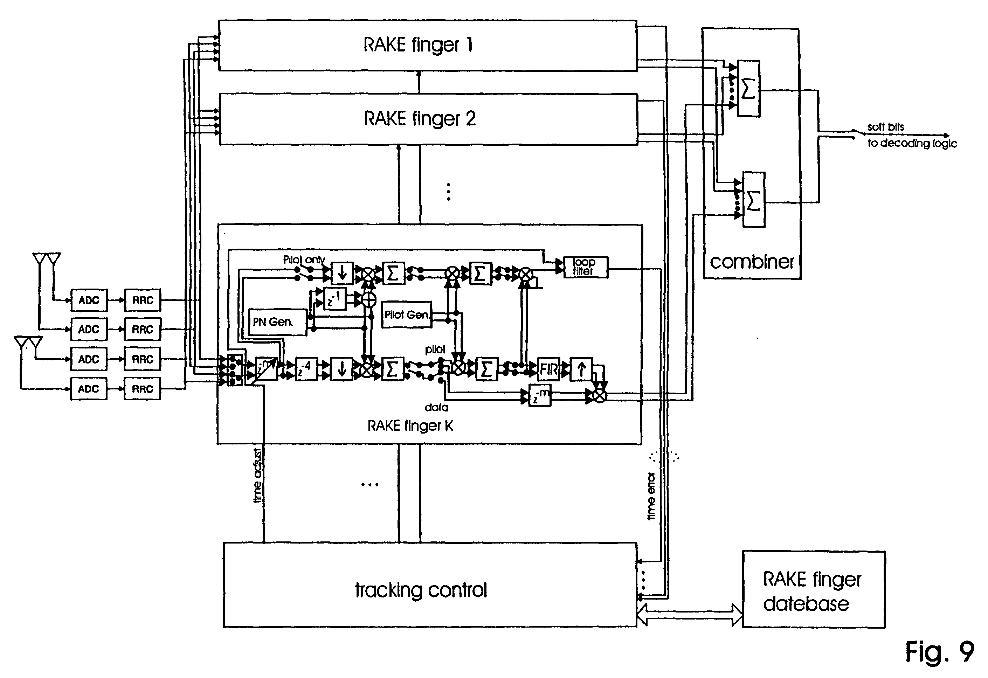

In einem zweiten Anwendungsbeispiel wird ein in Fig. 9 dargestellter, auf einer Pilotsequenz basierender, kohärenter RAKE Empfänger mit zweifacher Antennen-Diversity für Quadratur-Phase-Shift-Keying (QPSK) eingesetzt. Dieser RAKE-Empfänger ist speziell auf ein kohärentes Spreizspektrumverfahren ausgelegt, in dem periodisch Pilotsymbole in den Datenstrom eingefügt werden.

Von zwei IQ-Demodulatoren im Basisband vorliegende Signale zweier Antennen, werden zunächst mit Hilfe eines Analog/Digital-Konverters (ADC) abgetastet und quantisiert. Dabei übernimmt jeweils ein ADC die Inphasen- und ein ADC die Quadraturkomponente des Signals. Die Abtastrate beträgt das achtfache der Chiprate. Jeder RAKE Finger kann mit Hilfe eines Eingangssignalschalters jeweils einer der beiden Antennen zugeordnet werden. Das gewählte Eingangssignal wird danach in einen Zwischenspeicher eingelesen, wobei die Verzögerung in ganzzahligen Abtastwerten frei einstellbar ist.

Die Werte des On-Time-Signals werden danach noch mit einer zusätzlichen Verzögerung von vier Abtastwerten behaftet, wobei durch den Überabtastwert von acht diese Verzögerung genau einer halben Chipdauer entspricht. Das im Chiptakt abgetastete Signal wird nun mit dem konjugiert komplexen Spreizcode multipliziert und die zu einem Datensymbol gehörenden Chips summiert. Das Ergebnis der Summation wird für jedes Datensymbol ausgelesen und der Addierer zurückgesetzt.

Ein Demultiplexer trennt die Pilotsymbole von den Informationssymbolen. Die empfangenen Pilotsymbole werden mit dem konjugiert komplexen lokal erzeugten Pilotsymbolen multipliziert und die Summe über die Produkte für jeden Block aus Pilotsymbolen gebildet.

Die Summationsergebnisse sind die On-Time-Schätzwerte der Pilotsymbolkorrelation. Diese werden anschließend durch ein FIR-Filter zur Mittelung geführt, dessen Ausgangssignale die gemittelten Schätzwerte für Kanalamplitude und Phase des RAKE-Fingers darstellen.

Diese Schätzwerte werden nun entsprechend der benötigten Werteanzahl vervielfacht. Die Produkte der entsprechend verzögerten Informationssymbole werden mit dem konjugiert komplexen der Schätzwerte multipliziert und dem Combiner zur Mehrwegezusammenführung zugeführt. Im Combiner werden alle Inphasensummiert und alle Quadraturschätzwerte summiert.

Ein weiteres Demultiplexen der Inphasen- und Quadraturwerte liefert die Softbits, die der Dekodierungslogik bereitgestellt werden.

Die zeitliche Feinsynchronisation nutzt ausschließlich die Pilotsymbole. Hierfür werden zu den Pilotsymbolen gehörenden Abtastwerte unmittelbar nach der ersten Verzögerung abgegriffen und im Chiptakt abgetastet. Diese Werte werden nun mit der konjugiert komplexen Differenz zweier aufeinanderfolgenden Codesymbole multipliziert und für jedes Pilotsymbol die Summe über diese Produkte gebildet. Die Ergebnisse werden anschließend noch mit den konjugiert komplexen lokal erzeugten Pilotsymbolen multipliziert und die Summe über die Produkte für jeden Pilotsymbolblock gebildet.

Dieser Wert wird nun noch mit dem konjugiert komplexen des On-Time- Schätzwerts des Blocks von Pilotsymbolen multipliziert. Der Realteil dieses Produkts ist der Zeitfehlerschätzwert für den entsprechenden Pilotblock. Dieser wird nun noch durch das Schleifenfilter geführt, dessen Ausgang an die Kontrolleinheit zur Feinsynchronisation weitergegeben wird.

Das Schleifenfilter besteht aus einem integrierendem Pfad und einem Pfad, der das Fehlersignal mit einem Proportionalitätsfaktor wichtet. Das mit einem weiteren Proportionalitätsfaktor gewichtete integrierte Fehlersignal wird dem direkten Pfad addiert und bildet das Fehlersignal, welches an die Kontrolleinheit zur Feinsynchronisation weitergegeben wird. Das Schleifenfilter besitzt noch einen weiteren Eingang, welcher zusätzlich dem Integrator zugeführt wird. Mit Hilfe dieses Signals können Fehler, die dadurch entstehen, daß sich der Zeitversatz des Fingers nur in ganzzahligen Abtastwerten einstellen läßt, ausgeglichen werden.

Die Kontrolleinheit zur Feinsynchronisation ist über den Initialzustand der Zeitversätze der RAKE-Finger informiert. Der aktuelle Zustand der Zeitversätze wird in einem Registersatz, der RAKE-Finger Datenbank, gehalten. Wenn der Abstand zwischen RAKE-Fingern, die zu einer Antenne gehören, größer ist als der minimal zulässige Abstand von acht Abtastwerten, dann werden die entsprechenden RAKE-Finger getrennt betrachtet. In diesem Fall werden die Fehlersignale skaliert und gerundet und somit die Korrektursignale berechnet. Sollte sich herausstellen, daß durch die angestrebte Korrektur der Zeitversätze ein unerlaubter Zustand erreicht, d.h. der minimale Abstand zweier RAKE-Finger unterschritten wird, dann werden die Korrektursignale derart angepaßt, daß der Abstand zeitlich benachbarter RAKE-Finger derselben Antenne minimal acht Abtastwerte beträgt.

Beträgt hingegen der zeitliche Abstand zeitlich benachbarter RAKE-Finger derselben Antenne bereits acht Abtastwerte, dann wird die zeitliche Korrektur der Versätze für diese RAKE-Finger gemeinsam durchgeführt, d.h., die entsprechenden RAKE-Finger werden als eine Gruppe betrachtet. Zunächst wird für jede Gruppe der Zustand berechnet, der entsteht, wenn die Finger einzeln betrachtet werden. Sollte der Abstand einiger RAKE-Finger danach größer als der minimale Abstand sein, so werden diese RAKE-Finger aus der Gruppe entfernt und die Korrektursignale berechnet. Für die verbleibenden RAKE-Finger bzw. gesamte Gruppe, wird das Gruppenfehlersignal durch Mittelung aller Zeitfehlersignale der in der Gruppe befindlichen RAKE-Finger berechnet. Die Korrektursignale für die RAKE-Finger ergeben sich aus Skalierung des Gesamtfehlersignals und Rundung zum nächsten Abtastwert. In diesem Fall sind die Korrekturwerte alle gleich, so daß alle RAKE-Finger einer Gruppe den gleichen Korrekturversatz erfahren.

Sollte der Korrekturwert eines RAKE-Fingers ungleich null sein, so wird dieser mit einem weiteren Skalierungsfaktor dem Schleifenfilter als Schleifenfilterkorrektursignal zur Verfügung gestellt, um das Schleifenfilter an die veränderte Situation anzupassen. Dies ist notwendig, da die zeitliche Regelung bei der digitalen Implementierung des RAKE-Empfängers nur in diskreten Schritten, nämlich der Zeitspanne zwischen zwei Abtastwerten, möglich ist.

Es kann vorkommen, daß die Beträge der Fehlersignale zweier in einer Gruppe zusammengefaßter, benachbarter RAKE-Finger in der Summe stetig anwachsen, sich im Gesamtfehlersignal aber gegenseitig aufheben. Sollte dies der Fall sein, dann kann durch das Schleifenfilterkorrektursignal durch Addition entsprechender Kompensationswerte bei den Integratoren der Schleifenfilter ein Ausgleich geschaffen werden, ohne das Gesamtfehlersignal zu verändern.

## Patentansprüche

1. Verfahren zum Empfang von Spreizspektrum-Signalen, bei dem aus einem mit einem Spreizcode c(t) kodiertem Sendesignal ein Empfangssignal empfangen und gefiltert wird, danach in einem ersten Verfahrensteil in einem ersten RAKE-Finger

   das gefilterte Empfangssignal in einer On-Time-Korrelation mit einem konjugiert komplexen Spreizcode c*(t), der um eine Grund-Zeitverzögerung zum Spreizcode c(t) des Sendesignales verzögert ist, multipliziert und das Ergebnis in einem ersten Summierer summiert wird,

   das Ergebnis der ersten Summation als Informationssignal ausgegeben und der Summierer zurückgesetzt wird,

   entweder

   das gefilterte Empfangssignal in einer Late-Korrelation mit dem konjugiert komplexen Spreizcode c*(t) des Sendesignales, der um eine erste Grund-Zeitverzögerung und einer die erste Grund-Zeitverzögerung erhöhenden positiven Zusatz-Zeitverzögerung zum Spreizcode c(t) des Sendesignales verzögert ist, multipliziert und in einem zweiten Summierer summiert wird,

   das gefilterte Empfangssignal in einer Early-Korrelation mit dem konjugiert komplexen Spreizcode c*(t), der um die erste Grund-Zeitverzögerung und einer die erste Grund-Zeitverzögerung verringernden negativen Zusatz-Zeitverzögerung zum Spreizcode c(t) des Sendesignales verzögert ist, multipliziert und anschließend in einem dritten Summierer summiert wird,

   und anschließend ein Differenzergebnis als Differenz aus dem Ergebnis der Early- und der Late-Korrelation ermittelt und der zweite und dritte Summierer zurückgesetzt wird,

   oder

   das gefilterte Empfangssignal mit der Differenz aus dem konjugiert komplexen Spreizcode c*(t), der um die erste Grund-Zeitverzögerung und der die erste Grund-zeitverzögerung erhöhenden positiven Zusatz-Zeitverzögerung zum Spreizcode des Sendesignales verzögert ist, und dem konjugiert komplexen Spreizcode c*(t), der um die erste Grund-Zeitverzögerung und der die erste Grund-Zeitverzögerung verringernden negativen Zusatz-Zeitverzögerung zum Spreizcode des Sendesignales verzögert ist, multipliziert und in einem vierten Summierer summiert wird, wodurch das Differenzergebnis gebildet ist, nach dessen Weiterverarbeitung der vierte Summierer zurückgesetzt wird,

   anschließend als ein Fehlersignal der Realteil des Produkts aus dem auf dem einen oder dem anderen Weg ermittelten Differenzergebnis und dem Informationssignal ermittelt und damit die Größe der Grundverzögerung gesteuert wird,

   parallel zum ersten Verfahrensteil in einem zweiten Verfahrensteil in einem zweiten RAKE-Finger die gleichen Verfahrensschritte mit einer zweiten Grund-Zeitverzögerung, die gegenüber der ersten Grund-Zeitverzögerung eine Differenz aufweist, durchgeführt werden

   und die Informationssignale der parallel durchgeführten Verfahrensteile zusammengefaßt werden,

   **dadurch gekennzeichnet, daß**

   am Verfahrensanfang der Betrag der Differenz aus der ersten und der zweiten Grund-Zeitverzögerung größer ist als eine Mindestdifferenz und

   daß bei Erreichen der Mindestdifferenz während des Verfahrensablaufs durch die Differenz aus der ersten und der zweiten Grund-Zeitverzögerung das Fehlersignal des ersten Verfahrensteiles und des zweiten Verfahrensteiles addiert und diese Summe als neues Fehlersignal zur Steuerung der Grundverzögerung in beiden Verfahrensteilen genutzt wird.

2. Verfahren zum Empfang von Spreizspektrum-Signalen, bei dem aus einem mit einem Spreizcode c(t) kodiertem Sendesignal ein Empfangssignal empfangen wird, danach in einem ersten Verfahrensteil in einem ersten RAKE-FINGER

das Empfangssignal in einer On-Time-Korrelation mit einem gefilterten konjugiert komplexen Spreizcode c*(t), der um eine Grund-Zeitverzögerung zum Spreizcode c(t) des Sendesignales verzögert ist, multipliziert und das Ergebnis in einem ersten Integrierer integriert wird,

das Ergebnis der ersten Integration als Informationssignal ausgegeben und der Integrierer zurückgesetzt wird,

entweder

das Empfangssignal in einer Late-Korrelation mit dem gefilterten konjugiert komplexen Spreizcode c*(t) des Sendesignales, der um eine erste Grund-Zeitverzögerung und einer die erste Grund-Zeitverzögerung erhöhenden positiven Zusatz-Zeitverzögerung zum Spreizcode c(t) des Sendesignales verzögert ist, multipliziert und in einem zweiten Integrierer integriert wird,

das Empfangssignal in einer Early-Korrelation mit dem gefilterten konjugiert komplexen Spreizcode c*(t), der um die erste Grund-Zeitverzögerung und einer die erste Grund-Zeitverzögerung verringernden negativen Zusatz-Zeitverzögerung zum Spreizcode c(t) des Sendesignales verzögert ist, multipliziert und anschließend in einem dritten Integrierer integriert wird,

und anschließend ein Differenzergebnis als Differenz aus dem Ergebnis der Early- und der Late-Korrelation ermittelt und der zweite und dritte Integrierer zurückgesetzt wird,

oder

das Empfangssignal mit der Differenz aus dem gefilterten konjugiert komplexen Spreizcode c*(t), der um die erste Grund-Zeitverzögerung und der die erste Grund-Zeitverzögerung erhöhenden positiven Zusatz-Zeitverzögerung zum Spreizcode des Sendesignales verzögert ist, und dem gefilterten konjugiert komplexen Spreizcode c*(t), der um die erste Grund-Zeitverzögerung und der die erste Grund-Zeitverzögerung verringernden negativen Zusatz-Zeitverzögerung zum Spreizcode des Sendesignales verzögert ist, multipliziert und in einem vierten Integrierer integriert wird, wodurch das Differenzergebnis gebildet ist, nach dessen weiterverarbeitung der vierte Integrierer zurückgesetzt wird,

anschließend als ein Fehlersignal der Realteil des Produkts aus dem auf dem einen oder dem anderen Weg ermittelten Differenzergebnis und dem Informationssignal ermittelt und damit die Größe der Grundverzögerung gesteuert wird,

parallel zum ersten Verfahrensteil in einem zweiten Verfahrensteil in einem zweiten RAKE-Finger die gleichen Verfahrensschritte mit einer zweiten Grund-Zeitverzögerung, die gegenüber der ersten Grund-Zeitverzögerung eine Differenz aufweist, durchgeführt werden

und die Informationssignale der parallel durchgeführten Verfahrensteile zusammengefaßt werden,

**dadurch gekennzeichnet, daß**

am Verfahrensanfang der Betrag der Differenz aus der ersten und der zweiten Grund-Zeitverzögerung größer ist als eine Mindestdifferenz und

daß bei Erreichen der Mindestdifferenz während des Verfahrensablaufs durch die Differenz aus der ersten und der zweiten Grund-Zeitverzögerung das Fehlersignal des ersten Verfahrensteiles und des zweiten Verfahrensteiles addiert und diese Summe als neues Fehlersignal zur Steuerung der Grundverzögerung in beiden Verfahrensteilen genutzt wird.

3. Verfahren nach Anspruch 1 oder 2, **dadurch gekennzeichnet, daß** die Mindestdifferenz einer Chipdauer entspricht

4. Verfahren nach einem der Ansprüche 1 bis 3, **dadurch gekennzeichnet, daß** bei einer Reduzierung einer ursprünglich großen Differenz zwischen der ersten und der zweiten Grund-Zeitverzögerung während des Verfahrensablaufes auf die Mindestdifferenz, der erste und der zweite RAKE Finger gruppiert werden und die Verfahrensschritte fortan gemeinsam für die Gruppe durchgeführt werden.

5. Verfahren nach Anspruch 4, **dadurch gekennzeichnet, daß** ein RAKE-Finger aus der Gruppe entfernt wird wenn sich bei der Abarbeitung der Verfahrensschritte die Differenz zwischen der ersten und der zweiten Grund-Zeitverzögerung auf einen Wert größer als die Mindestdifferenz einstellt.

6. Verfahren nach Anspruch 4 oder 5, **dadurch gekennzeichnet, daß** eine Gruppe von Beginn der Verfahrensabarbeitung an unabhängig von der Differenz zwischen erster und und zweiter Grund-Zeitverzögerung initiiert wird.

**7.** Verfahren nach Anspruch 4 oder 5, **dadurch gekennzeichnet, daß** zu einem ersten RAKE-Finger ein zweiter RAKE-Finger, dessen Grundverzögerung sich um den Mindestabstand zum ersten RAKE-Finger unterscheidet, hinzugefügt wird, wodurch der erste und der zweite RAKE-Finger eine Gruppe bilden oder ein dritter RAKE-Finger mit Mindestabstand zu einer Gruppe von RAKE-Fingern hinzugefügt wird, wodurch sich die Zahl der RAKE-Finger in einer Gruppe erhöht.

**Claims**

**1.** Method for receiving spread spectrum signals, in which a reception signal is received and filtered from a transmission signal coded with a spreading code c(t), and then in a first method part, in a first RAKE finger,

the filtered reception signal is multiplied in an on-time correlation by a complex conjugate spreading code c*(t), which is delayed by a basic time delay with respect to the spreading code c(t) of the transmission signal, and the result is summed in a first summer,

the result of the first summation is output as an information signal and the summer is reset,
either

the filtered reception signal is multiplied in a late correlation by the complex conjugate spreading code c*(t) of the transmission signal, which is delayed by a first basic time delay and a positive additional time delay - which increases the first basic time delay - with respect to the spreading code c(t) of the transmission signal, and summed in a second summer,

the filtered reception signal is multiplied in an early correlation by the complex conjugate spreading code c*(t), which is delayed by the first basic time delay and a negative additional time delay - which reduces the first basic time delay - with respect to the spreading code c(t) of the transmission signal, and subsequently summed in a third summer,

and a difference result is subsequently determined as difference between the result of the early correlation and the late correlation and the second and third summers are reset,
or

the filtered reception signal is multiplied by the difference between the complex conjugate spreading code c*(t) which is delayed by the first basic time delay and the positive additional time delay - which increases the first basic time delay - with respect to the spreading code of the transmission signal and the complex conjugate spreading code c*(t) which is delayed by the first basic time delay and the negative additional time delay - which reduces the first basic time delay - with respect to the spreading code of the transmission signal and summed in a fourth summer, thereby forming the difference result, after further processing of which the fourth summer is reset,

the real part of the product of the difference result determined in one way or the other and the information signal is subsequently determined as an error signal and the magnitude of the basic delay is controlled thereby,
in parallel with the first method part, in a second method part in a second RAKE finger, the same method steps are carried out with a second basic time delay, which has a difference with respect to the first basic time delay, and the information signals of the method parts carried out in parallel are combined,
**characterized in that**
at the start of the method, the magnitude of the difference between the first and second basic time delays is greater than a minimum difference, and
**in that**, in the case where the difference between the first and second basic time delays reaches the minimum difference during the method sequence, the error signal of the first method part and of the second method part is added and this sum is utilized as a new error signal for controlling the basic delay in both method parts.

**2.** Method for receiving spread spectrum signals, in which a reception signal is received from a transmission signal coded with a spreading code c(t), and then in a first method part, in a first RAKE finger,

the reception signal is multiplied in an on-time correlation by a filtered complex conjugate spreading code c*(t), which is delayed by a basic time delay with respect to the spreading code c(t) of the transmission signal, and the result is integrated in a first integrator,

the result of the first integration is output as an information signal and the integrator is reset,
either

the reception signal is multiplied in a late correlation by the filtered complex conjugate spreading code c*(t) of the transmission signal, which is delayed by a first basic time delay and a positive additional time delay - which increases the first basic time delay - with respect to the spreading code c(t) of the transmission signal, and integrated in a second integrator,

the reception signal is multiplied in an early correlation by the filtered complex conjugate spreading code c*(t), which is delayed by the first basic time delay and a negative additional time delay - which reduces the first basic time delay - with respect to the spreading code c(t) of the transmission signal, and subsequently integrated in a third integrator,

and a difference result is subsequently determined as difference between the result of the early correlation and the late correlation and the second and third integrators are reset,

or

the reception signal is multiplied by the difference between the filtered complex conjugate spreading code c*(t) which is delayed by the first basic time delay and the positive additional time delay - which increases the first basic time delay - with respect to the spreading code of the transmission signal and the filtered complex conjugate spreading code c*(t) which is delayed by the first basic time delay and the negative additional time delay - which reduces the first basic time delay - with respect to the spreading code of the transmission signal and integrated in a fourth integrator, thereby forming the difference result, after further processing of which the fourth integrator is reset,

the real part of the product of the difference result determined in one way or the other and the information signal is subsequently determined as an error signal and the magnitude of the basic delay is controlled thereby, in parallel with the first method part, in a second method part in a second RAKE finger, the same method steps are carried out with a second basic time delay, which has a difference with respect to the first basic time delay, and the information signals of the method parts carried out in parallel are combined,

**characterized in that**

at the start of the method, the magnitude of the difference between the first and second basic time delays is greater than a minimum difference, and

**in that**, in the case where the difference between the first and second basic time delays reaches the minimum difference during the method sequence, the error signal of the first method part and of the second method part is added and this sum is utilized as a new error signal for controlling the basic delay in both method parts.

3. Method according to Claim 1 or 2, **characterized in that** the minimum difference corresponds to a chip duration.

4. Method according to one of Claims 1 to 3, **characterized in that**, in the event of a reduction of an originally large difference between the first and second basic time delays during the method sequence to the minimum difference, the first and second RAKE fingers are grouped and the method steps are henceforth carried out jointly for the group.

5. Method according to Claim 4, **characterized in that** a RAKE finger is removed from the group if, during the processing of the method steps, the difference between the first and second basic time delays is set to a value greater than the minimum difference.

6. Method according to Claim 4 or 5, **characterized in that** a group is initiated from the beginning of the method processing independently of the difference between first and second basic time delays.

7. Method according to Claim 4 or 5, **characterized in that** a second RAKE finger is added to a first RAKE finger, the basic delay of said second RAKE finger differing by the minimum separation with respect to the first RAKE finger, as a result of which the first and second RAKE fingers form a group, or a third RAKE finger is added with a minimum separation to a group of RAKE fingers, thereby increasing the number of RAKE fingers in a group.

**Revendications**

1. Procédé de réception de signaux à étalement de spectre, dans lequel, à partir d'un signal d'émission codé avec un code d'étalement c(t), un signal de réception est reçu et filtré puis ensuite, dans une première partie du procédé, dans un premier doigt RAKE,

le signal de réception filtré est multiplié dans une corrélation en temps réel par un code d'étalement c*(t) complexe en conjugaison, qui est retardé à raison d'un retard de base par rapport au code d'étalement c(t) du signal d'émission, et

le résultat est totalisé dans un premier sommateur,

le résultat de la première totalisation est émis sous forme de signal d'information et le sommateur est réinitialisé, soit

le signal de réception filtré est, dans une corrélation tardive, multiplié par le code d'étalement c*(t) complexe en conjugaison du signal d'émission qui est retardé à raison d'un premier retard de base et d'un retard supplémentaire positif augmentant le premier retard de base par rapport au code d'étalement c(t) du signal d'émission et est totalisé dans un deuxième sommateur,

le signal de réception filtré est, dans une corrélation anticipée, multiplié par le code d'étalement c*(t) complexe en conjugaison qui est retardé à raison du premier retard de base et d'un retard supplémentaire négatif diminuant le premier retard de base par rapport au code d'étalement c(t) du signal d'émission et est ensuite totalisé dans un troisième sommateur,

et un résultat de différence étant ensuite déterminé sous forme de différence entre le résultat de la corrélation anticipée et tardive, et le deuxième et le troisième sommateur étant réinitialisés,

soit

le signal de réception filtré est multiplié par la différence entre le code d'étalement c*(t) complexe en conjugaison qui est retardé à raison du premier retard de base et du retard supplémentaire positif augmentant le premier retard de base par rapport au code d'étalement du signal d'émission, et le code d'étalement c*(t) complexe en conjugaison qui est retardé à raison du premier retard de base et du retard supplémentaire négatif diminuant le premier retard de base par rapport au code d'étalement du signal d'émission, et est totalisé dans un quatrième sommateur, ce qui constitue le résultat de différence, après traitement ultérieur duquel le quatrième sommateur est réinitialisé,

ensuite on détermine en tant que signal d'erreur la partie réelle du produit à partir du résultat de différence déterminé de l'une ou l'autre manière et du signal d'information et on contrôle ainsi l'amplitude du retard de base,

parallèlement à la première partie du procédé, dans une deuxième partie du procédé, on exécute dans un deuxième doigt RAKE les mêmes étapes opératoires avec un deuxième retard de base qui présente une différence par rapport au premier retard de base

et on regroupe les signaux d'information des parties de procédé réalisées parallèlement,

**caractérisé en ce qu'**au début du procédé, le montant de la différence entre le premier et le deuxième retard de base est supérieur à une différence minimale et

qu'une fois que la différence minimale pendant le déroulement du procédé est atteinte par la différence entre le premier et le deuxième retard de base, les signaux d'erreur de la première partie du procédé et de la deuxième partie du procédé sont additionnés et que cette somme est utilisée comme nouveau signal d'erreur pour le contrôle du retard de base dans les deux parties du procédé.

2. Procédé de réception de signaux à étalement de spectre, dans lequel, à partir d'un signal d'émission codé avec un code d'étalement c(t), un signal de réception est reçu puis ensuite, dans une première partie du procédé, dans un premier doigt RAKE,

le signal de réception est multiplié dans une corrélation en temps réel par un code d'étalement c*(t) filtré complexe en conjugaison, qui est retardé à raison d'un retard de base par rapport au code d'étalement c(t) du signal d'émission, et

le résultat est intégré dans un premier intégrateur,

le résultat de la première intégration est émis sous forme de signal d'information et l'intégrateur est réinitialisé,

soit

le signal de réception est multiplié dans une corrélation tardive par le code d'étalement c*(t) filtré complexe en conjugaison du signal d'émission qui est retardé à raison d'un premier retard de base et d'un retard supplémentaire positif augmentant le premier retard de base par rapport au code d'étalement c(t) du signal d'émission, et ensuite intégré dans un deuxième intégrateur,

le signal de réception est multiplié dans une corrélation anticipée par le code d'étalement c*(t) filtré complexe en conjugaison qui est retardé à raison du premier retard de base et d'un retard supplémentaire négatif diminuant le premier retard de base par rapport au code d'étalement c(t), et ensuite intégré dans un troisième intégrateur,

et ensuite un résultat de différence est déterminé sous forme de différence entre la corrélation anticipée et tardive, et le deuxième et le troisième intégrateurs sont réinitialisés,

soit

le signal de réception est multiplié par la différence entre le code d'étalement c*(t) filtré complexe en conjugaison qui est retardé à raison du premier retard de base et du retard supplémentaire positif augmentant le premier retard de base par rapport au code d'étalement du signal d'émission et le code d'étalement c*(t) filtré complexe en conjugaison qui est retardé à raison du premier retard de base et du retard supplémentaire négatif diminuant le premier retard de base par rapport au code d'étalement du signal d'émission, et est intégré dans un quatrième intégrateur, ce qui constitue le résultat de différence, après traitement ultérieur duquel le quatrième intégrateur est réinitialisé,

ensuite on détermine en tant que signal d'erreur la partie réelle du produit à partir du résultat de différence déterminé de l'une ou l'autre manière et du signal d'information et on contrôle ainsi l'amplitude du retard de base,

parallèlement à la première partie du procédé, dans une deuxième partie du procédé, on réalise dans un deuxième doigt RAKE les mêmes étapes opératoires avec un deuxième retard de base qui présente une différence par rapport au premier retard de base

et on regroupe les signaux d'information des parties de procédé réalisées parallèlement,

**caractérisé en ce qu'**au début du procédé, le montant de la différence entre le premier et le deuxième retard de base est supérieur à une différence minimale et

qu'une fois que la différence minimale pendant le déroulement du procédé est atteinte par la différence entre le premier et le deuxième retard de base, les signaux d'erreur de la première partie du procédé et de la deuxième partie du procédé sont ajoutés et que cette somme est utilisée comme nouveau signal d'erreur pour le contrôle du retard de base dans les deux parties du procédé.

3. Procédé selon la revendication 1 ou 2, **caractérisé en ce que** la différence minimale équivaut à une durée de puce.

4. Procédé selon l'une quelconque des revendications 1 à 3, **caractérisé en ce que** dans le cas d'une réduction d'une différence initialement grande entre le premier et le deuxième retard de base pendant le déroulement du procédé jusqu'à la différence minimale, le premier et le deuxième doigt RAKE sont groupés et les étapes opératoires sont désormais réalisées en commun pour le groupe.

5. Procédé selon la revendication 4, **caractérisé en ce qu'**un doigt RAKE est enlevé du groupe lorsque, lors du traitement des étapes opératoires, la différence entre le premier et le deuxième retard de base s'établit à une valeur supérieure à la différence minimale.

6. Procédé selon la revendication 4 ou 5, **caractérisé en ce qu'**un groupe est initié depuis le début du traitement opératoire indépendamment de la différence entre le premier et le deuxième retard de base.

7. Procédé selon la revendication 4 ou 5, **caractérisé en ce qu'**il est adjoint à un premier doigt RAKE un deuxième doigt RAKE dont le retard de base se distingue par la distance minimale jusqu'au premier doigt RAKE, ce qui a pour effet que le premier et le deuxième doigt RAKE forment un groupe ou qu'un troisième doigt RAKE est adjoint avec une distance minimale à un groupe de doigts RAKE, ce qui augmente le nombre de doigts RAKE dans un groupe.

**Fig. 1a**

**Fig. 1b**

**Fig. 1c**

EP 1 119 923 B1

| i | a) $\tau_i/T_c$ | Re$\{\xi_i\}$ | Im$\{\xi_i\}$ | b) $\tau_i/T_c$ | Re$\{\xi_i\}$ | Im$\{\xi_i\}$ | c) $\tau_i/T_c$ | Re$\{\xi_i\}$ | Im$\{\xi_i\}$ |
|---|---|---|---|---|---|---|---|---|---|
| 1 | 0.0 | 0.834 | 0.000 | 0.0 | 0.834 | 0.000 | 0.0 | 0.834 | 0.000 |
| 2 | 3.6 | 0.731 | 0.012 | 1.2 | 0.731 | 0.012 | 1.2 | -0.731 | 0.012 |
| 3 | 8.1 | 0.346 | -0.122 | 2.7 | 0.346 | -0.122 | 2.7 | 0.346 | -0.122 |

**Fig. 2**

Fig. 3

$$\alpha[R_c(\epsilon - T_c/2) - R_c(\epsilon + T_c/2)]$$
$$\frac{\partial}{\partial \epsilon} R_c(\epsilon)$$

**Fig. 4**

**Fig. 5**

Fig. 6

**Fig. 7**

Fig. 8

Fig. 9